Europäisches Patentamt

European Patent Office

Office européen des brevets

(19)

(11) Veröffentlichungsnummer: **0 050 279**
**B1**

(12) **EUROPÄISCHE PATENTSCHRIFT**

(45) Veröffentlichungstag der Patentschrift: **28.05.86**

(51) Int. Cl.⁴: **B 60 T 8/72**

(21) Anmeldenummer: **81108112.4**

(22) Anmeldetag: **09.10.81**

(54) Blockiergeschützter Bremskraftregelkreis.

(30) Priorität: **20.10.80 DE 3039574**
**11.02.81 DE 3104876**

(43) Veröffentlichungstag der Anmeldung:
**28.04.82 Patentblatt 82/17**

(45) Bekanntmachung des Hinweises auf die
Patenterteilung:
**28.05.86 Patentblatt 86/22**

(84) Benannte Vertragsstaaten:
**AT BE CH DE FR GB IT LI NL SE**

(56) Entgegenhaltungen:
**EP-A-0 050 280**
**US-A-3 883 183**

**AUTOMOBILTECHNISCHE ZEITSCHRIFT, Band
81, Nr. 11, November 1979, Seiten 569-
572,577,578,583, Stuttgart, DE. H. LEIBER et al.:
"Antiblockiersystem für Personenwagen mit
digitaler Elektronik - Aufbau und Funktion"**

(73) Patentinhaber: **KNORR-BREMSE AG
Moosacher Strasse 80 Postfach 401060
D-8000 München 40 (DE)**

(72) Erfinder: **Beckmann, Heinrich
Scharnhorststrasse 14
D-4950 Minden (DE)**
Erfinder: **Ottersbach, Jens
Marienstrasse 7
D-4950 Minden (DE)**
Erfinder: **Roider, Willibald
Apothekenweg 8g
D-8056 Neufahrn (DE)**
Erfinder: **Saumweber, Eckart, Dr.
Mühlstrasse 15
D-8035 Gauting (DE)**

(56) Entgegenhaltungen:
**ELEKTRISCHE BAHNEN, Band 79, Nr. 9,
September 1981, Seiten 331-336, München, DE.
E. Saumweber et al.: "Eine neue
Gleitschutzgeneration für die Eisenbahn unter
Verwendung von Mikroprozessoren"**

Courier Press, Leamington Spa, England.

EP 0 050 279 B1

## Beischreibung

Die Erfindung bezieht sich auf einen blockiergeschützten Bremskraftegelkreis, inbesondere für Schienenfahrzeuge, mit mindestens einem, mit einem überwachten Rad verbundenen Radgenerator, der drehzahlproportional kodierte Signale abgibt, mit einem Bezugswertgeber, der ein der Fahrzeuggeschwindigkeit nachgebildetes Bezugswertsignal erzeugt, mit einem Differenzierer, der der Radbeschleunigung bzw. -verzögerung proportionale Signale erzeugt, mit Schwellwertschalkreisen, die die Radbeschleunigungssignale, die Radgeschwindigkeitssignale und/oder Differenzsignale zwischen Radgeschwindigkeitssignalen und den Bezugssignalen mit vorgegebenen Schwellwerten vergleichen, und mit einer Auswerteschaltung, die in Abhängigkeit von Ausgangssignalen der Schwellwetschaltkreise den Bremsdruck absenken, konstant halten oder erhöhen, wobei das Absenken und Erhöhen des Bremsdruckes in Abhängigkeit von den Ausgangssignalen der Schwellwertsschaltkreise schnell oder gestuft und damit langsam erfolgt, und wobei der Bremsdruck bei Beginn einer Bremsung bei Unterschreiten einer ersten, negativen Beschleunigungsschwelle $(Y_S)$ konstant gehalten wird.

Ein solcher Bremskraftregelkreis ist aus der US—A—3 883 183 bekannt. Die dort gezeigte Bremsanlage verwendet zwei negative Beschleunigungsschwellwerte, zwei positive Beschleunigungsschwellwerte und einen Schlupfwert. Zunächst wird beim Einbremsen der Bremsmitteldruck mit steilem Gradienten, d.h. rasch erhöht. Sobald irgend ein Rad den ersten negativen Schwellsert erreicht hat, wird durch Setzen eines Flip-Flops ein Taktgenerator gestartet, was zur Folge hat, daß sämtliche nachfolgende Bremsdruckänderungen gepulst und damit mit flachem Gradienten stattfinden. Das Flip-Flop wird erst dann wieder zurückgesetzt, wenn ein Bremskontakt genöffnet wird. Das individuelle Rad, das den ersten negativen Beschleunigungsschwellwert erreicht hat, wird durch Schließen seines individuellen Einlaßventils dann auf konstantem Bremsdruck gehalten, bis entweder der erste negative Beschleunigungsschwellwert rücküberschritten wird, oder ein zweiter negativer Beschleunigungsschwellwert erreicht wird. Im ersten Fall wird von "Druck konstant halten" auf "gepulstes Druck anheben" umgeschaltet, während im zweiten Fall von "Druck konstant halten" auf "Druck schnell absenken" umgeschaltet wird. Bei nachfolgenden Regelspielen wiederholen sich diese Vorgänge in entsprechender Weise. Wird beispielsweise — ohne daß das Bremspedal zwischenzeitlich losgelassen wurde — bei einem weiteren Regelspiel wiederum der erste negative Beschleunigungsschwellwert unterschritten, so wird wieder auf "Bremsdruck konstant halten" umgeschaltet.

Aus der Zeitschrift: "Automobiltechnische Zeitschrift", Bd. 81, Nr. 11, November 1979, Seiten 569—572, 577, 578 und 583 ist ein Blockierschutzregler ähnlich der US—A—3 883 183 bekannt.

Ein von der Firma Knorr-Bremse GmbH, München, unter der Bezeichnung "GR3" vertriebener Bremskraftregelkreis verwendet als Auslösekriterien für die Bremsdruckabsenkung bei drohender Blockiergefahr ebenfalls Schwellwerte der Radverzögerung und hiersu überlagerte Schwellwerte des Schlupfes (sogenanntes Δ V-Kriterium). In Abhängigkeit von der absoluten Radgeschwindigkeit werden die einzelnen Schwellwerte modifiziert oder es wird die Art der Bremsdruckbeeinflussung modifiziert. Beim Auslösekriterium der Radverzögerung wurde nach Unterschreiten eines ersten (negativen) Schwellwertes der Radbeschleunigung stets der eingesteuerte Bremsdruck abgesenkt. Der hierbei verwendete erste Ansprechschwellwert mußte betragsmäßig relativ klein gemacht werden, damit ein drohendes Blockieren möglichst frühzeitig bekannt werden konnte. Dies führte dazu, daß das überwachte Rad nicht soweit in den Schlupf getrieben wurde, daß der maximal mögliche Haftwert ausgenutzt wurde. Es wurde daher Bremsweg verschenkt, wobei freilich ein Blockieren des Rades mit größter Wahrscheinlichkeit verhindert wurde.

Bei den beiden eingangs abgehandelten Druckschriften wurde zwar der Bremsweg dadurch verkürzt, daß bei Beginn einer Bremsung bei Unterschreiten der ersten, negativen Beschleunigungsschwellwerte der Bremsdruck zunächst konstant gehalten (und ncht abgesenkt) wurde. Nachteilig ist aber, daß bei jedem weiteren Regelspiel bei Unterschreiten dieses ersten, negativen Beschleunigungsschwellwertes wiederum auf "Bremsdruck konstant halten" umgeschaltet wurde, was teilweise zu übermäßigem Schlupf führte, wodurch der optimale Schlupf überschritten wurde und damit Bremsweg verschenkt wurde.

Aufgabe der Erfindung ist es daher, den blockiergeschützten Bremskraftregelkreis der eingangs genannten Art dahingehend zu verbessern, daß der Bremsweg verkürzt wird.

Diese Aufgabe wird erfindungsgemäß dadurch gelöst, daß das Konstanthalten des Bremsdrucks bei Unterschreiten der ersten, negativen Beschleunigungsschwelle $(Y_S)$ nur in einer Bremsstartphase durchgeführt wird, welche mit dem Einbremsen beginnt und dann beendet wird, wenn die Readbeschleungung einer weiteren, betragsmäßig größeren Schwellwert $(Y_0)$ als der ersten Schwellwert $(Y_S)$ unterschritten hat.

Die Startphase beginnt hierbei also mit dem ersten Einbremsen (in der Regel im Anschluß an eine Fahrtstrecke mit konstanter Geschwindigkeit).

Damit auch dann ein Blockieren des Rades sicher verhindert wird, wenn der betragsmäßig größere Schwellwert $(Y_0)$ nicht unterschritten wird, die Radgeschwindigkeit jedoch sehr klein ist, wird nach einer weiteren Ausgestaltung der Erfindung während der Startphase von "Bremsdruck halten" auf "Bremsdruck langsam absenken" umgeschaltet, wenn die Radgeschwindigkeit einen vorgegebenen Bezugswert ($V_3$) unterschritten hat.

Da auch dies in gewissen Grenzfällen noch nicht mit Sicherheit ein Blockieren verhindert, wird nach einer weiteren vorteilhaften Ausgestaltung der Erfindung während der Startphase von "Bremsdruck halten" bzw. "Bremsdruck langsam absenken" auf "Bremsdruck rasch absenken" umgeschaltet, wenn die Radgeschwindigkeit winen weiteren kleineren Bezugswert ($v_4$) unterschritten hat.

Während beim Stand der Technik die einzelnen Schwellwerte bei jedem Regelspiel gültig sind, werden bei der Erfindung bestimmte Schwellwerte nur in einer definierten "Startphase" verwendet, während bei nachfolgenden Regelspielen stattdessen andere Auslösekriterien gültig sind.

Zusätlich hat sich gezeigt, daß mit dem blockiergeschützten Bremskraftregelkreis nach der Erfindung ein ruhigeres Regelverhalten des Rades erzielt wird, d.h. die einzelnen Regelzyklen mit Bremsdruck halten, Bremsdruck absenken und Bremsdruck wieder anheben treten hier deutlich seltener auf als bei der Regelung nach dem Stand der Technik.

Im Folgenden wird die Erfindung anhand eines Ausführungsbeispiels im Zusammenhang mit den Figuren ausführlich erläutert. Es zeigt:

Fig. 1 den zeitlichen Verlauf der Radbeschleunigung bei einer Bremsung;

Fig. 2 eine Übersicht der Bremsdruckbefehle in Abhängigkeit von verschiedenen, aus der Radumdrehungsgeschwindigkeit abgeleiteten Kriterien;

Fig. 3 ein Meßdiagramm des zeitlichen Bremsdruckverlaufes bei einem vierachsigen Schienenfahrzeug;

Fig. 4 ein Meßdiagramm der bei dem Bremsdruckverlauf der Figur 3 auftretenden Radgeschwindigkeiten, der Fahrzeuggeschwindigkeit und einer Bezugsgeschwindigkeit;

Fig. 5 ein Meßdiagramm ähnlich Figur 4, wobei der Bremsdruck in der Startphase jedoch noch weiter erhöht wird, und

Fig. 6 ein schematisches Blockschaltbild des Bremskraftregelkreises nach der Erfindung.

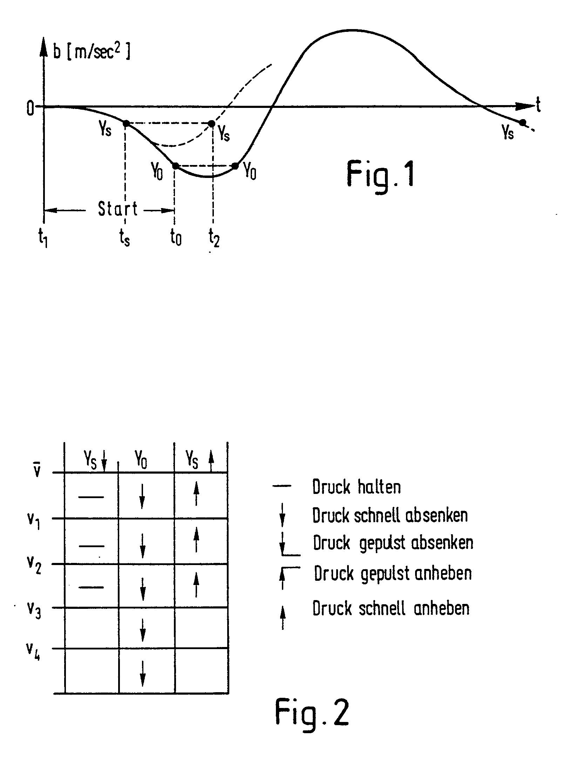

In Figur 1 ist schematisch der zeitliche Verlauf der Radbeschleunigung während eines Bremsvorganges dargestellt. Die Größen $Y_s$ und $Y_0$ bezeichnen die einzelnen eingestellten Schwellwerte für die Radbeschleunigung.

Die erwähnte "Startphase" beginnt mit dem ersten Anlegen der Bremse (Zeitpunkt $t_1$ in Fig. 1) im Anschluß an eine ungebremste Fahrt und endet dann, wenn die Radbeschleunigung den betragsmäßig relativ großen (negativen) wert $Y_0$ unterschritten hat (Zeitpunkt $t_0$). Die Form der Kurve der Figur 1 hängt — wie allgemein bekannt — von den einzelnen Bremsparametern, wie Oberfläche von Rad und Fahrbahn, Haftwert, Bremsdruck etc. ab. Je nach Größe dieser Bremsparameter ergeben sich unterschiedliche Kurvenverläufe, was in Fig. 1 durch die durchgezogene und die gestrichelte Linie verdeutlicht ist.

Die vorliegende Erfindung bezieht sich nur auf diese Startphase, so daß ein detaillierteres Eingehen auf die übrigen Schwellwerte hier nicht erforderlich ist.

In Figur 2 ist dargestellt, welche den Bremsdruck beeinflussenden Maßnahmen in Abhängigkeit von den einzelnen Auslösekriterien ergriffen werden. Durch eine der tatsächlichen Fahrzeuggeschwindigkeit nachgebildete Bezugsgeschwindigkeit $\bar{v}$ (sog. fiktive Linie) sowie durch vorbestimmte Schwelwerte $v_1$—$v_4$ der Radgeschwindigkeit werrden fünf Geschwindigkeitsbereiche, sog. Geschwindigkeitskorridore, festgelegt. Die Radumdrehungsgeschwindigkeit oder, etwas unexakter, die Radgeschwindigkeit nimmt von oben nach unten in Figur 2 ab. Die Spalten $Y_s \downarrow$ bzw. $Y_s \uparrow$ bezeichnen hierbei die Zustände, bei denen der Wert $Y_s$ von größeren Werten her unterschritten bzw. von kleineren Werten her rücküberschritten wird.

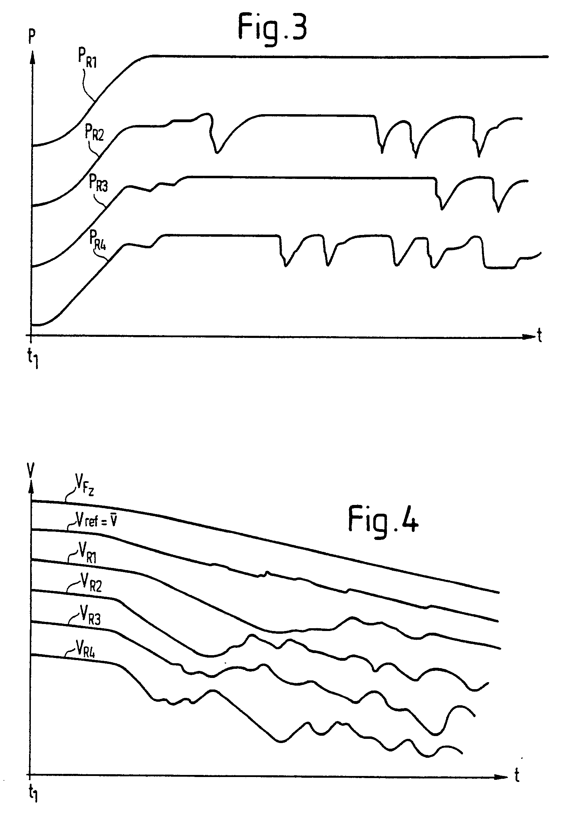

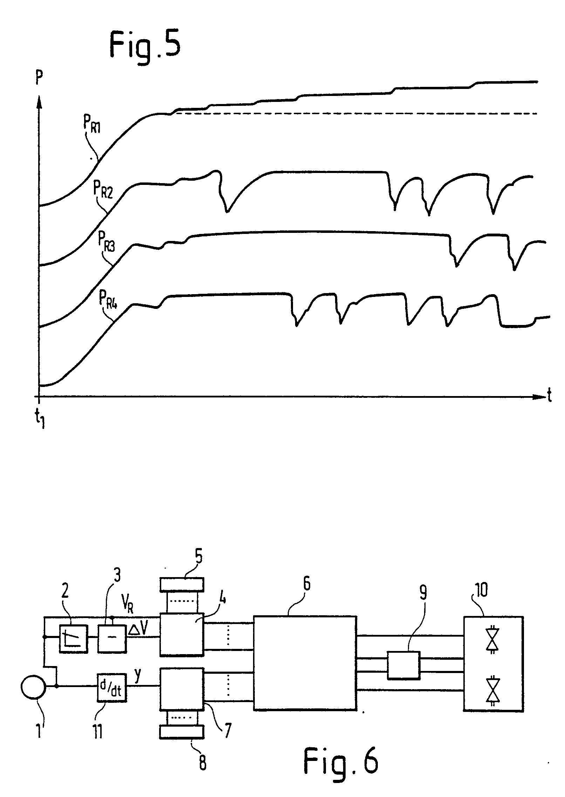

Zum Zeipunkt $t_1$ (Fig. 1) beginnt ein Bremsvorgang durch Einsteuern eines Bremsdruckes. Das entsprechende Rad wird hierbei verzögert. Der Bremsdruck wird solange erhöht, bis die Radbeschleunigung zum Zeipunkt $t_s$ den Schwellwert $Y_s$ erreicht hat. Befindet sich die Radgeschwindigkeit in einem der ersten drei "Geschwindigkeitskorridore" von $\bar{v}$—$v_3$, so wird zu diesem Zeitpunkt der vorhandene Bremsdruck gehalten, was beispielsweise dadurch geschieht, daß bei ohnehin geschlossenm Auslaßventil das Einlaßventil geschlossen wird. Wie die Kurve $P_{R1}$ der Figur 3 zeigt, kann die Phase des Druckhaltens sehr lange dauern und eventuell sogar während des gesamten Bremsvorganges. Ist nun dieser gehaltene Bremsdruck so groß, daß die Radbeschleunigung den Schwellwert $Y_s$ in Figur 1 von kleineren Wurten zu größeren Werten hin rücküberschreitet (vgl. die gestrichelte Linie in Figur 5), so wird zum Zeitpunkt $t_2$ der Bremsdruck weiter erhöht. Voraussetzung hierbei ist, daß die Radbeschleunigung den Wert $Y_0$ noch nicht erreicht hat, d.h., daß die "Startphase" noch andauert. Diese Bremsdruckerhöhung wird so lange durchgeführt, bis die Radbeschleunigung den Schwellwert $Y_s$ wieder unterschreitet. Ist dieser gehaltene Bremsdruck für den weiteren Bremsverlauf zu groß, beispielsweise, wenn sich der Haftwert verschlechtert, so sind folgende Fälle denkbar:

a) die Radbeschleunigung nimmt weiter ab und unterschreitet den Schwellwert $Y_0$. Dieser Schwellwert ist betragsmäßig relativ groß gewählt, so daß bei Erreichen dieses Schwellwertes akute Blockiergefahr besteht. In diesem Falle wird der vorhandene Bremsdruck schnell abgesenkt, was beispielsweise durch vollstädigtes Öffnen des Einlaßventils geschieht. Hiermit ist die Startphase beendet, und der weitere Regelzyklus verläuft nach Regelkriterien, die nicht Gegenstand der vorliegenden Erfindung sind.

b) Der Schwellwert $Y_0$ wird nicht erreicht, die Differenzgeschwindigkeit $\Delta v$ zwischen Bezugsgeschwindigkeit und Radgeschwindigkeit vergrößert sich jedoch so weit, daß das entsprechende Rad sehr langsam dreht und ebenfalls kurz vor dem Blockieren steht. In diesem Falle wird in dem "Geschwindigkeitskorridor" von $v_3$—$v_4$ der Bremsdruck langsam abgesenkt, was durch impulsförmiges Ansteuern des Auslaßventils, sog. "Pulsen" erfolgt. Ist dagegen die Radgeschwindigkeit kleiner als $v_4$ und damit $\Delta v$ recht groß, so wird der Bremsdruck rasch abgesenkt.

Die Figuren 3, 4 und 5 zeigen in der Praxis erhaltene Meßwerte eines vierachsigen Schienenfahrzeuges. Mit dem Index 1 ist die vordere Achse des vorderen Drehgestelles, mit dem Index 2 die hintere Achse des vorderen Drehgestelles, mit dem Index 3 die vordere Achse des hinteres Drehgestelles und mit dem Index 4 die hintere Achse des hinteren Drehgestelles bezeichnet. Die Kurve $V_{Fz}$ bezeichnet die tatsächliche Fahrzeuggeschwindigkeit, die von einem ungebremsten Meßrad abgegriffen wurde. $\bar{v}$ bezeichnet die sog. fiktive Geschwindigkeit, die in bekannter Weise eine Nachbildung der bei üblichen Fahrzeugen nicht erhältlichen Fahrzeuggeschwindigkeit darstellt. Der Deutlichkeit halber sind in den Figuren 3 und 4 die einzelnen Kurven versetzt zueinander gezeichnet. Für einen korrekten Maßstab müßten die jeweiligen Anfangspunkte der Kurven zum Zeitpukt $t_1$ von einem gemeinsamen Punkt aus starten. Der zeitliche Maßstab der Figuren 3, 4 und 5 stimmt jedoch überein. Besonders hervorzuheben ist der Verlauf des ersten Rades, bei dem der Bremsdruck gemäß einem Ausführungsbeispiel der Erfindung nach dem anfänglichen Anheben während des gesamten Bremsvorganges konstant gehalten wird (Fig. 3). Die zugehörige Radgeschwindigkeit $V_{R1}$ läßt gleichwohl Schwankung erkennen, die auf sich ändernden Haftwert zwischen Rad und Schiene schließen lassen. Diese Änderungen sind jedoch nicht so stark, daß eines der oben erwähnten Kriterien für eine Änderung des Bremsdruckes erreicht werden. Besonders hervorzuheben ist auch der Verlauf des ersten Rade, bei der in Figur 5 gezeigten Weiterbildung der Erfindung, wo sich das Rad während der gesamten Bremsung in der Startphase befindet. Die gestrichelte Linie zeigt hierbei den Bremsdruck, bei dem zum ersten Mal der Schwellwert $Y_S$ unterschritten wurde. Bei den einzelnen Stufen wurde jeweils der Wert $Y_S$ unterschritten (Bremsdruck konstant) bzw. rücküberschritten (Bremsdruck anheben). Die übrigen Räder zeigen dagegen mehr oder weniger starke Gechwindigkeitseinbrüche und die entsprechenden Gegenmaßnahmen. Allerdings zeigt auch das dritte Rad eine relativ lange, stabile Periode, bei der Änderungen des Bremsdruckes nicht erforderlich sind.

Figur 6 zeigt ein schematisches Blockschaltbild des erfindungsgemäßen Bremskraftregelkreises. Mit "1" ist ein mit dem entsprechenden Rad mechanisch gekoppelter Radgenerator bezeichnet, der drehzahlproportional kodierte Signale abgibt. Bei den heute üblichen Radgeneratoren wird ein impulsförmiges Signal ausgegeben, dessen Frequenz der Radumdrehungsgeschwindigkeit proportional ist. Dieses mit "Radgeschwindigkeitssignal" bezeichnete Signal wird einem Kondensatorentladeschaltkreis 2 bekannter Bauart zugeführt, wo das Signal $\bar{v}$ gebildet wird. Dieses Signal wird zusammen mit dem Radgeschwindigkeitssignal $v_R$ einem Vergleicher 3 zugeführt, der ein Differenzsignal $\Delta v$, das der Differenz der Eingangssignale entspricht, abgibt. Die Signale $v_R$ und $\Delta v$ werden einem Komparator 4 zugeführt und dort mit Signalen aus einem Bezugswetgeber 5 verglichen. Der Bezugswertgeber 5 enthält die Schwellwerte für die genannten Geschwindigkeitskorridore, d.h. die Werte $v_1$—$v_4$. Die Ausgänge des Komparators 4 führen Signale, die den ensprechenden Geschwindigkeitskorridor bezeichnen bzw. die geschilderten $\Delta v$-Kriterien. Diese Signale werden einer Auswerteschaltung 6 zugeführt.

Weiterhin wird das Radgeschwindigkeitssignal aus dem Radgenerator 1 einem Differnzierschaltkreis 11 zugeführt, an dessen Ausgang ein der Radbeschleunigung proportionales Signal (vgl. Figur 1) erscheint. Dieses Signal wird in einem weiteren Komparator 7 mit den Beschleunigungungsschwellwerten $Y_S$—$Y_V$ aus einem Bezugswertgeber 9 verglichen. In Abhängigkeit von diesem Vergleich erscheinen auf den Ausgangsleitungen des Komparators 7 entsprechende Signale, die anzeigen, welches der Beschleunigungskriterien erfüllt ist. Diese Signale werden ebenfalls der Auswerteschaltung 6 zugeführt.

Die Auswerteschaltung 6 führt die in der Tabelle der Figur 2 angegebenen logischen Operationen durch und gibt auf ihren Ausgangsleitungen entsprechende Signale zur Steuerung von Bremsventilen 10 aus. Mit dem Bezugszeichen 9 ist ein Impulsgeber bezeichnet, der eine impulsförmige Ansteuerung der Bremsventile 10 für ein langsames Druckanheben bzw. Druckabsenken steuert.

Anhand der Tabelle der Figur 2 ist es ohne erfinderisches Zutun möglich, die Auswerteschaltung 6 schaltungstechnisch mit herkömmlichen Bauteilen zu realisieren, so daß eine detaillierte Beschreibung der Auswerteschaltung 6 hier nicht erforderlich ist.

Zusammenfassend wird mit der vorliegenden Erdfindung ein blockiergeschützter Bremskraftregelkreis geschaffen, mit dem die Bremswege des Fahrzeuges deutlich verkürzt werden können. Der wesentliche Grundgedanke liegt darin, daß nach Erreichen einer ersten (negativen) Beschleunigungsschwelle der zu diesem Zeitpunkt vorhandene Bremsdruck gehalten wird bzw. nach einer Weiterbildung der Erfindung sogar noch weiter erhöht wird, und nicht — wie beim Stand der Technik — bereits abgesenkt wird. Man läßt damit das überwachte Rad relativ große Schlupfwerte erreichen, was zu einer besseren Ausnutzung des möglichen Haftwertes führt. Obwohl die genauen physikalischen Vorgänge zwischen Rad und Fahrbahn in Abhängigkeit vom Schlupf noch nicht bekannt sind, ist zu vermuten, daß durch den relativ hohen Schlupf zwischen Rad und Fahrbahn ein Aufrauhen oder "Putzen" der Fahrbahn und/oder der Lauffläche der Räder erfolgt, was einen weiteren Anstieg des Haftwertes zur folge hat.

**Patentansprüche**

1. Blockiergeschützter Bremskraftregelkreis, insbesondere für Schienenfahrzeuge, mit mindestens einem, mit einem überwachten Rad verbundenen Radgenerator (1), der drehzahlproportional kodierte Signale abgibt, mit einem Bezugswertgeber (2), der ein der Fahrzeuggeschwindigkeit nachgebildetes Bezugswertsignal erzeugt, mit einem Differenzierer (11), der der Radbeschleunigung bzw. -verzögerung proportionale Signale erzeugt, mit Schwellwertschaltkreisen (4, 7), die die Radbeschleunigungssignale, die Radgeschwindigkeitssignale und/oder Differenzsignale zwischen Radgeschwindigkeitssignalen und den Bezugssignalen mit vorgegebenen Schwellwerten ($V_1$—$V_4$; $Y_s$—$Y_v$) vergleichen, und mit einer Auswerteschaltung (6), die in Abhängigkeit von Ausgangssignalen der Schwellwertschaltkreise (4, 7) den Bremsdruck absenken, konstant halten oder erhöhen, wobei das Absenken und Erhöhen des bremsdruckes in Abhängigkeit von den Ausgangssignalen der Schwellwertschaltkreise (4, 7) schnell oder gestuft und damit langsam erfolgt, und wobei der Bremsdruck bei Beginn einer Bremsung bei Unterschreiten einer ersten, negativen Beschleunigungsschwelle ($Y_s$) konstant gehalten wird, dadurch gekennzeichnet, daß das Konstanthalten des Bremsdruckes bei Unterschreiten der ersten, negativen Beschleunigungsschwelle ($Y_s$) nur in einer Bremsstartphase durchgeführt wird, welche mit dem Einbremsen beginnt und dann beendet wird, wenn die Radbeschleunigung einen weiteren, betragsmäßig größeren Schwellwert ($Y_o$) als den ersten Schwellwert ($Y_s$) unterschritten hat.

2. Bremskraftregelkreis nach Anspruch 1, dadurch gekennzeichnet, daß während der Startphase von "Bremsdruck halten" auf "Bremsdruck langsam absenken" umgeschaltet wird, wenn die Radgeschwindigkeit einen vorgegebenen Bezugswert ($v_3$) unterschritten hat.

3. Bremskraftregelkreis nach den Ansprüchen 1 oder 2, dadurch gekennzeichnet, daß während der Startphase von "Bremsdruck halten" bzw. "Bremsdruck langsam absenken" auf "Bremsdruck rasch absenken" umgeschaltet wird, wenn die Radgeschwindigkeit einen weiteren kleinen Bezugswert ($v_4$) unterschritten hat.

**Revendications**

1. Dispositif de réglage de la force de freinage à protection contre le blocage, en particulier pour des véhicules sur rails, avec au moins un générateur de roue (1) qui est relié à la roue contrôlée et qui émet des signaux codés proportionnellement à la vitesse de rotation, avec un générateur de valeurs de référence (2) qui produit un signal de valeurs de référence qui simule la vitesse du véhicule, avec un différenciateur (11) qui produit des signaux proportionnels à l'accélération ou à la décélération de la roue, avec des circuits à valeurs de seuil (4, 7) qui comparent les signaux d'accélération de la roue, les signaux de la vitesse de la roue et/ou des signaux de différence entre les signaux de la vitesse de la roue et les signaux de référence, avec des valeurs de seuil prédéterminées ($V_1$—$V_4$; $Y_s$—$Y_v$), et avec un circuit d'évaluation (6) qui, en fonction des signaux de sortie des circuits à valeurs de seuil (4, 7) réduit, maintient à une valeur constante ou accroît la pression de freinage, la réduction et l'accroissement de la pression de freinage en fonction des signaux de sortie des circuits de seuil (4, 7) étant effectués rapidement ou par paliers, et, de ce fait lentement, et la pression de freinage étant, au début d'un freinage, avec passage en-dessous d'un premier seuil négatif de l'accélération ($Y_s$), maintenu à une valeur constante, caractérisé par le fait que le maintien à une valeur constante de la pression de freinage, au passage en-dessous du premier seuil négatif ($Y_s$) de l'accélération, n'est réalisé que pendant une première phase de démarrage du freinage, qui commence avec le serrage et se termine ensuite si l'accélération de la roue passe en-dessous d'une seconde valeur de seuil ($Y_o$) plus importante que celle de la première valeur de seuil ($Y_s$).

2. Dispositif de réglage de la force de freinage selon la revendication 1, caractérisé par le fait que pendant la phase de démarrage on commute de "maintien de la pression de freinage" à "réduction lente de la pression de freinage", lorsque la vitesse de la roue dépasse une valeur de référence ($v_3$) prédéterminée.

3. Dispositif de réglage de la force de freinage selon les revendications 1 ou 2, caractérisé par le fait que pendant la phase de démarrage on commute de "maintien de la pression de freinage" ou "abaissement lent de la pression de freinage" à "abaisser rapidement la pression de freinage" lorsque la vitesse de la roue dépasse une seconde valeur faible de référence ($v_4$).

**Claims**

1. Anti-locking brake power control loop, more particularly for rail vehicles, having at least one wheel generator (1) which is connected with a monitored wheel and which emits signals which are coded in proportion to the rotational speed, having a reference value transmitter (2) which produces a reference value signal simulating the speed of the vehicle, having a differentiator (11) which produces signals proportional to the wheel-acceleration or deceleration, having threshold value switching circuits (4, 7) which compare the wheel-acceleration signals, the wheel-speed signals and/or difference signals between wheel-speed signals and the reference signals with preset threshold values ($V_1$—$V_4$; $Y_s$—$Y_v$) and having an evaluating circuit (6) which, as a function of output signals of the threshold value switching circuits (4, 7), lowers the brake pressure, keeps it constant or raises it, the brake pressure being lowered and raised as a function of the output signals of the threshold value switching circuits (4, 7) quickly or in a stepped manner and with that slowly and being kept constant at the beginning of a braking action when there is a shortfall and a first, negative acceleration threshold $(Y_s)$ is not reached, characterised in that the brake pressure is kept constant when there is a shortfall and the first, negative acceleration threshold $(Y_s)$ is not reached only in a starting phase of braking which begins with the actual braking action and then ends when the wheel-acceleration has fallen short of a further threshold value $(Y_0)$ which in terms of amount is greater than the first threshold value $(Y_s)$.

2. Brake power control loop according to claim 1, characterised in that during the starting phase there is a switch-over from "maintaining brake pressure" to "lowering brake pressure slowly" when the wheel-speed has fallen short of a preset reference value $(v_3)$.

3. Brake power control loop according to claims 1 or 2, characterised in that during the starting phase there is a switch-over from "maintaining brake pressure" or "lowering brake pressure slowly" to "lowering brake pressure quickly" when the wheel-speed has fallen short of a further small reference value $(v_4)$.

Fig.1

| $\bar{v}$ | $\gamma_S \downarrow$ | $\gamma_0$ | $\gamma_S \uparrow$ |
|---|---|---|---|
| $v_1$ | — | ↓ | ↑ |
| $v_2$ | — | ↓ | ↑ |
| $v_3$ | — | ↓ | ↑ |
| $v_4$ | | ↓ | |
| | | ↓ | |

— Druck halten

↓ Druck schnell absenken

↓_ Druck gepulst absenken

⌐ Druck gepulst anheben

↑ Druck schnell anheben

Fig.2

0 050 279

# Fig.3

# Fig.4

## Fig.5

## Fig.6